(19) **Europäisches Patentamt European Patent Office Office européen des brevets**

(11) **EP 4 529 678 B1**

(12) **EUROPEAN PATENT SPECIFICATION**

(45) Date of publication and mention of the grant of the patent:
**25.03.2026 Bulletin 2026/13**

(21) Application number: **23765038.7**

(22) Date of filing: **09.08.2023**

(51) International Patent Classification (IPC):
**G10L 21/0356** (2013.01)      **G10L 25/30** (2013.01)
**G10L 25/57** (2013.01)

(52) Cooperative Patent Classification (CPC):
**G10L 25/57; G10L 21/0356; G10L 25/30**

(86) International application number:
**PCT/US2023/029888**

(87) International publication number:
**WO 2025/034217 (13.02.2025 Gazette 2025/07)**

(54) **USING AUDIO CLASSIFICATION TO ENHANCE AUDIO IN VIDEOS**

VERWENDUNG VON AUDIOKLASSIFIZIERUNG ZUR VERBESSERUNG VON AUDIO IN VIDEOS

UTILISATION D'UNE CLASSIFICATION AUDIO POUR AMÉLIORER L'AUDIO DANS DES VIDÉOS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**02.04.2025 Bulletin 2025/14**

(73) Proprietor: **Google LLC**
**Mountain View, CA 94043 (US)**

(72) Inventors:
• **KIM, Moonseok**
**Mountain View**
**California 94043 (US)**
• **PATROS, Elliot**
**Mountain View**
**California 94043 (US)**
• **SINGARAJU, Sneh**
**Mountain View**
**California 94043 (US)**
• **ANSAI, Michelle**
**Mountain View**
**California 94043 (US)**

(74) Representative: **Betten & Resch**
**Patent- und Rechtsanwälte PartGmbB**
**Maximiliansplatz 14**
**80333 München (DE)**

(56) References cited:
**US-A1- 2020 075 033      US-A1- 2022 130 408**
**US-A1- 2022 310 113**

Description

## BACKGROUND

Capturing high-quality video on a mobile device is possible with the quality of camera hardware on mobile devices such as smartphones, tablets, etc. However, because mobile devices may not include studio-quality audio hardware, e.g., directional microphones, microphones with tuned sensitivity, etc., capturing high-quality audio is not possible. Due to the small form factor and other limitations (e.g., battery), mobile devices are not large enough to accommodate such hardware.

To overcome limitations in capturing high-quality audio when capturing video using a mobile device, professional videographers may use wireless lavalier microphones, shotgun microphones with passive wind screen, shock-absorbing mounts, and the like. However, a casual user that wants to record a video has to rely on the mobile device hardware for audio capture. Manufacturers of mobile devices have tried to provide audio enhancement algorithms to make up for audio hardware deficiencies. However, it may be difficult to obtain high quality results with such techniques.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

US 2022/310113 A1 discloses apparatus and methods related to separation of audio sources. The method includes receiving an audio waveform associated with a plurality of video frames. The method includes estimating, by a neural network, one or more audio sources associated with the plurality of video frames. The method includes generating, by the neural network, one or more audio embeddings corresponding to the one or more estimated audio sources. The method includes determining, based on the audio embeddings and a video embedding, whether one or more audio sources of the one or more estimated audio sources correspond to objects in the plurality of video frames. The method includes predicting, by the neural network and based on the one or more audio embeddings and the video embedding, a version of the audio waveform comprising audio sources that correspond to objects in the plurality of video frames.

US 2020/075033 A1 discloses systems and methods for data driven radio enhancement. For example, methods may include demodulating a radio signal to obtain a demodulated audio signal; determining a window of audio samples based on the demodulated audio signal; applying an audio enhancement network to the window of audio samples to obtain an enhanced audio segment, in which the audio enhancement network includes a machine learning network that has been trained using demodulated audio signals derived from radio signals; and storing, playing, or transmitting an enhanced audio signal based on the enhanced audio segment.

In US 2022/130408 A1, the audio content (e.g., an audio track, an audio file, an audio signal, etc.) of a content item (e.g., multimedia content, a movie, streaming content, etc.) may be modified to augment and/or include one or more auditory events, such as a sound, a plurality of sounds, a sound effect(s), a voice(s), and/or music.

## SUMMARY

Objects of the present disclosure are achieved by subject matters of independent claims. Some of further possible exemplary embodiments are defined in dependent claims.

A computer-implemented method includes obtaining a video that includes an audio portion. The method further includes separating the audio portion into a plurality of channels, where each channel corresponds to a particular audio source. The method further includes obtaining, with an on-screen classifier model, an indication of whether the particular audio source for each channel is depicted in the video, where image embeddings for a plurality of video frames of the video and audio embeddings for the plurality of channels are provided as input to the on-screen classifier model. The method further includes determining, with an audio-type classifier model, an auditory object classification for each channel. The method further includes determining a respective gain for each channel based on the indication of whether the particular audio source for the channel is depicted in the video and the auditory object classification for the channel. The method further includes modifying each channel by applying the respective gain. The method further includes after the modifying, mixing the modified channels with the audio portion to generate a combined audio. The method further includes mixing at least a part of higher-frequency portions of the audio portion in with the combined audio.

In some embodiments, , the auditory object classification is one of: an enhancer type or a distractor type and determining the respective gain for each channel based on the indication of whether the particular audio source for the channel is depicted in the video and the auditory object classification for the channel comprises determining the respective gain to each channel such that a volume level of channels associated with the enhancer type is raised and a volume level of channels associated with the distractor type is lowered. In some embodiments, separating the audio portion into the plurality of channels is such that each of the plurality of channels is associated with a respective sound type. In some embodiments, one or more of the plurality of channels is obtained by performing deduplication to combine two or more audio sources in the audio portion that are of a same sound type. In some embodiments, the image embeddings represent respective local video features for a plurality of regions of a frame of the video. In some embodiments, the audio embeddings represent respective local audio features for each of the plurality of channels. In some embodiments, the respective gain for each channel is based on a confidence associated with the indication and a confidence associated with the auditory object classification.

In some embodiments, the separating is performed using an audio-separation model wherein the audio-separation model uses the image embeddings as a conditioning input, wherein the conditioning input provides cues to audio-separation model about audio sources present in the video.

In some embodiments, a non-transitory computer-readable medium with instructions stored thereon that, when executed by one or more computers, cause the one or more computers to perform operations including: obtaining a video that includes an audio portion; separating the audio portion into a plurality of channels, where each channel corresponds to a particular audio source; obtaining, with an on-screen classifier model, an indication of whether the particular audio source for each channel is depicted in the video, where image embeddings for a plurality of video frames of the video and audio embeddings for the plurality of channels are provided as input to the on-screen classifier model; determining, with an audio-type classifier model, an auditory object classification for each channel; determining a respective gain for each channel based on the indication of whether the particular audio source for the channel is depicted in the video and the auditory object classification for the channel; modifying each channel by applying the respective gain; after the modifying, mixing the modified channels with the audio portion to generate a combined audio; and mixing at least a part of higher-frequency portions of the audio portion in with the combined audio.

In some embodiments, the auditory object classification is one of: an enhancer type or a distractor type determining a respective gain for each channel based on the indication of whether the particular audio source for the channel is depicted in the video and the auditory object classification for the channel comprises: determining a respective gain to each channel such that a volume level of the channels classified as the enhancer type is raised and the volume level of the channels classified as the distractor type is lowered. In some embodiments, separating the audio portion into the plurality of channels is such that each of the plurality of channels is associated with a respective sound type. In some embodiments, one or more of the plurality of channels is obtained by performing deduplication to combine two or more audio sources in the audio portion that are of a same sound type. In some embodiments, the image embeddings represent local video features for a plurality of regions of a frame of the video.

In some embodiments, a computing device comprises one or more processors and a memory coupled to the one or more processors, with instructions stored thereon that, when executed by the processor, cause the processor to perform operations. The operations may include obtaining a video that includes an audio portion; separating the audio portion into a plurality of channels, where each channel corresponds to a particular audio source; obtaining, with an on-screen classifier model, an indication of whether the particular audio source for each channel is depicted in the video, where image embeddings for a plurality of video frames of the video and audio embeddings for the plurality of channels are provided as input to the on-screen classifier model; determining, with an audio-type classifier model, an auditory object classification for each channel; determining a respective gain for each channel based on the indication of whether the particular audio source for the channel is depicted in the video and the auditory object classification for the channel; modifying each channel by applying the respective gain; after the modifying, mixing the modified channels with the audio portion to generate a combined audio; and mixing at least a part of higher-frequency portions of the audio portion in with the combined audio.

In some embodiments, the auditory object classification is one of: an enhancer type or a distractor type and determining a respective gain for each channel based on the indication of whether the particular audio source for the channel is depicted in the video and the auditory object classification for the channel comprises: determining a respective gain to each channel such that a volume level of the channels classified as the enhancer type is raised and the volume level of the channels classified as the distractor type is lowered. In some embodiments, separating the audio portion into the plurality of channels is such that each of the plurality of channels is associated with a respective sound type. In some embodiments, one or more of the plurality of channels is obtained by performing deduplication to combine two or more audio sources in the audio portion that are of a same sound type. In some embodiments, the image embeddings represent local video features for a plurality of regions of a frame of the video.

The techniques described in the specification advantageously provide a way to determine which audio sources to enhance and which audio sources to reduce or block using machine-learning models. The techniques provide a software solution that avoids having to purchase expensive audio equipment, while maintaining the audio quality.

## BRIEF DESCRIPTION OF THE DRAWINGS

Figure 1 is a block diagram of an example network environment to generate combined audio, according to some embodiments described herein.

Figure 2 is a block diagram of an example computing device to generate combined audio, according to some embodiments described herein.

Figure 3 illustrates an example architecture of a runtime system to record audio, according to some embodiments described herein.

Figures 4A-4B illustrate an example architecture to generate an enhanced video file, according to some embodiments described herein.

Figure 5 illustrates an example user interface with options for specifying user preferences, according to some embodiments described herein.

Figure 6 illustrates an example flowchart of a method to generate combined audio, according to some embodiments described herein.

## DETAILED DESCRIPTION

## Example Environment 100

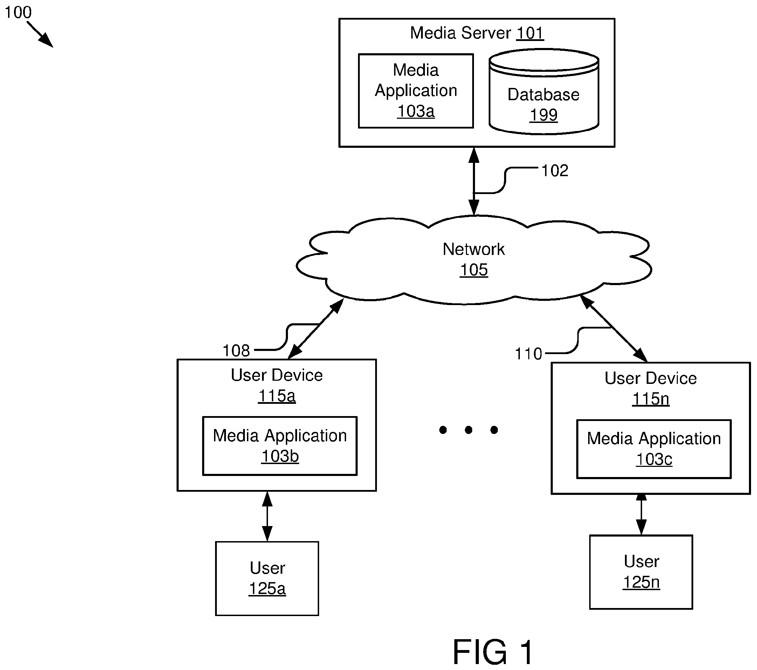

Figure 1 illustrates a block diagram of an example environment 100 to generate combined audio. In some embodiments, the environment 100 includes a media server 101, a user device 115a, and a user device 115n that are coupled to a network 105. Users 125a, 125n may be associated with respective user devices 115a, 115n. In some embodiments, the environment 100 may include other servers or devices not shown in Figure 1. In Figure 1 and the remaining figures, a letter after a reference number, e.g., "115a," represents a reference to the element having that particular reference number. A reference number in the text without a following letter, e.g., "115," represents a general reference to embodiments of the element bearing that reference number.

The media server 101 may include a processor, a memory, and network communication hardware. In some embodiments, the media server 101 is a hardware server. The media server 101 is communicatively coupled to the network 105 via signal line 102. Signal line 102 may be a wired connection, such as Ethernet, coaxial cable, fiber-optic cable, etc., or a wireless connection, such as Wi-Fi®, Bluetooth®, or other wireless technology. In some embodiments, the media server 101 sends and receives data to and from one or more of the user devices 115a, 115n via the network 105. The media server 101 may include a media application 103a and a database 199.

The database 199 may store machine-learning models, training data sets, original videos, enhanced videos, etc. The database 199 may also store social network data associated with users 125, user preferences for the users 125, etc.

The user device 115 may be a computing device that includes a memory coupled to a hardware processor. For example, the user device 115 may include a mobile device, a tablet computer, a laptop computer, a desktop computer, a mobile telephone, a wearable device, a head-mounted display, a mobile email device, a portable game player, a portable music player, a reader device, or another electronic device capable of accessing a network 105.

In the illustrated implementation, user device 115a is coupled to the network 105 via signal line 108 and user device 115n is coupled to the network 105 via signal line 110. The media application 103 may be stored as media application 103b on the user device 115a and/or media application 103c on the user device 115n. Signal lines 108 and 110 may be wired connections, such as Ethernet, coaxial cable, fiber-optic cable, etc., or wireless connections, such as Wi-Fi®, Bluetooth®, or other wireless technology. User devices 115a, 115n are accessed by users 125a, 125n, respectively. The user devices 115a, 115n in Figure 1 are used by way of example. While Figure 1 illustrates two user devices, 115a and 115n, the disclosure applies to a system architecture having one or more user devices 115.

The media application 103 may be stored on the media server 101 or the user device 115. In some embodiments, the operations described herein are performed on the media server 101 or the user device 115. In some embodiments, some operations may be performed on the media server 101 and some may be performed on the user device 115.

Performance of operations is in accordance with user settings. For example, the user 125a may specify settings that operations are to be performed on their respective user device 115a and not on the media server 101. With such settings, operations described herein are performed entirely on user device 115a and no operations are performed on the media server 101. Further, a user 125a may specify that video and/or other data of the user is to be stored only locally on a user device 115a and not on the media server 101. With such settings, no user data is transmitted to or stored on the media server 101. Transmission of user data to the media server 101, any temporary or permanent storage of such data by the media server 101, and performance of operations on such data by the media server 101 are performed only if the user has agreed to transmission, storage, and performance of operations by the media server 101. Users are provided with options to change the settings at any time, e.g., such that they can enable or disable the use of the media server 101.

Machine learning models (e.g., neural networks or other types of models), if utilized for one or more operations, are stored and utilized locally on a user device 115, with specific user permission. Server-side models are used only if permitted by the user. Further, a trained model may be provided for use on a user device 115. During such use, if permitted by the user 125, on-device training of the model may be performed. Updated model parameters may be transmitted to the media server 101 if permitted by the user 125, e.g., to enable federated learning. Model parameters do not include any user

4

data.

In some embodiments, the media application 103 may be implemented using hardware including a central processing unit (CPU), a field-programmable gate array (FPGA), an application-specific integrated circuit (ASIC), machine learning processor/ co-processor, any other type of processor, or a combination thereof. In some embodiments, the media application 103a may be implemented using a combination of hardware and software.

The media application 103 obtains a video that includes an audio portion. A video as referred to herein, includes a plurality of frames, with audio. For example, the media application 103b on the user device 115a records the video or the media application 103a on the media server 101 receives a video recorded by the user device 115a. The media application 103 separates the audio portion of the video into multiple channels. For example, the media application 103 may separate the audio portion into four channels. Each channel corresponds to a particular audio source (i.e., a particular object in the environment of the user device 115a, which is generating sound). The separating may be performed by an audio-separation model that takes the audio portion as input. The audio-separation model may be a trained machine-learning model as described in greater detail below, or any alternative signal processing algorithm able to separate audio signals into component parts (e.g., through frequency analysis of the audio signal).

In some embodiments, the media application 103 includes an on-screen classifier model that receives image embeddings for video frames of the video (e.g., generated by a trained machine learning model that generates image embeddings based on features of the video provided to the model as input) and audio embeddings for the channels (e.g., generated by a trained machine learning model that generates audio embeddings based on features of audio provided as input to the model) as input. The on-screen classifier model outputs an indication of whether the particular audio source for each channel is depicted in the video. The indication may be associated with a confidence (e.g., 1 indicating highest confidence, 0.5 indicating medium confidence, and 0 indicating low confidence). For example, if the video depicts a dog (represented by the image embeddings) and the audio portion includes barking sounds (represented by the audio embeddings), the confidence may be 1 (or close to 1). In another example, if there is a mismatch between the image and audio embeddings (e.g., "dog" in video, but "chirping sounds" in audio), it may be determined that the audio source is not depicted in the video. In some embodiments, depending on the level of match between the audio (indicated by audio embeddings) and the video (indicated by the image embeddings), the indication may be true or false, and may have an associated with a confidence score. Further decision making may be based on the confidence score satisfying a threshold criterion.

The media application 103 includes an audio-type classifier model that, based on each channel, determines an auditory object classification that includes either an enhancer type or a distractor type. For example, human voices may correspond to the enhancer type while traffic noises correspond to the distractor type.

The media application 103 determines a respective gain for each channel based on the indication of whether the particular audio source for the channel is depicted in the video and the auditory object classification for the channel. The media application 103 modifies each channel by applying the respective gain and mixes the modified channels with the audio portion to generate a combined audio. In some embodiments, the combined audio is mixed with the plurality of video frames to generate an enhanced video.

## Example Computing Device 200

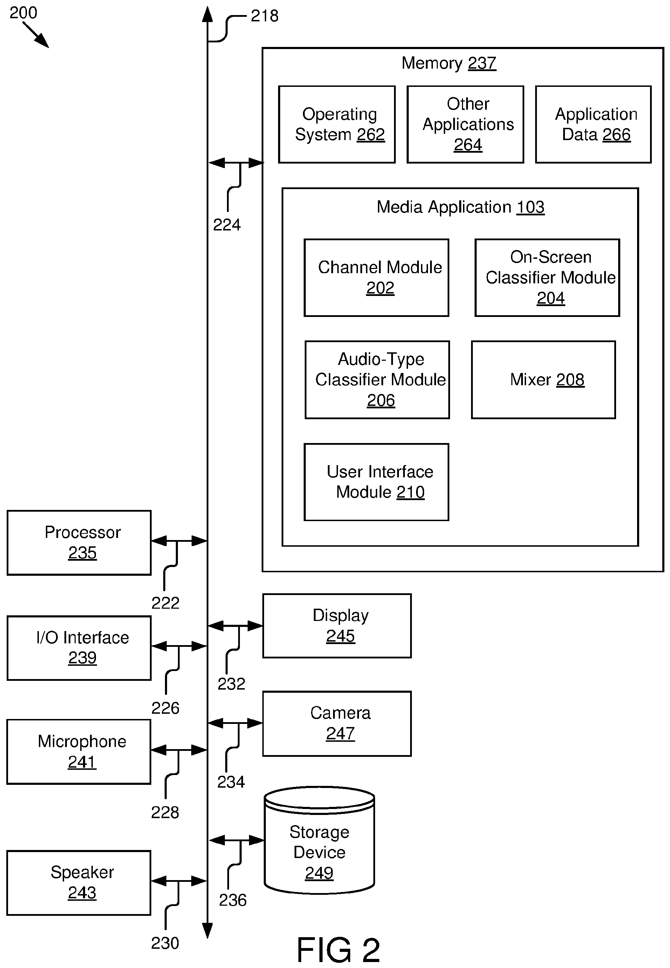

Figure 2 is a block diagram of an example computing device 200 that may be used to implement one or more features described herein. Computing device 200 can be any suitable computer system, server, or other electronic or hardware device. In one example, computing device 200 is media server 101 used to implement the media application 103a. In another example, computing device 200 is a user device 115.

In some embodiments, computing device 200 includes a processor 235, a memory 237, an input/output (I/O) interface 239, a microphone 241, a speaker 243, a display 245, a camera 247, and a storage device 249, all coupled via a bus 218. The processor 235 may be coupled to the bus 218 via signal line 222, the memory 237 may be coupled to the bus 218 via signal line 224, the I/O interface 239 may be coupled to the bus 218 via signal line 226, the microphone 241 may be coupled to the bus 218 via signal line 228, the speaker 243 may be coupled to the bus 218 via signal line 230, the display 245 may be coupled to the bus 218 via signal line 232, the camera 247 may be coupled to the bus 218 via signal line 234, and the storage device 249 may be coupled to the bus 218 via signal line 236.

Processor 235 can be one or more processors and/or processing circuits to execute program code and control basic operations of the computing device 200. A "processor" includes any suitable hardware system, mechanism or component that processes data, signals or other information. A processor may include a system with a general-purpose central processing unit (CPU) with one or more cores (e.g., in a single-core, dual-core, or multi-core configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality, a special-purpose processor to implement neural network model-based processing, neural circuits, processors optimized for matrix computations (e.g., matrix multiplication), or other systems. In some embodiments, processor 235 may include one or more co-processors that implement neural-network processing. In some embodiments, processor 235 may be a processor that processes data to produce probabilistic output, e.g., the output produced by processor 235 may be imprecise or may be accurate within a range from an expected output. Processing need not be limited to a particular geographic location or have temporal limitations. For example, a processor may perform its functions in real-time, offline, in a batch mode, etc. Portions of processing may be performed at different times and at different locations, by different (or the same) processing systems. A computer may be any processor in communication with a memory.

Memory 237 is typically provided in computing device 200 for access by the processor 235, and may be any suitable processor-readable storage medium, such as random access memory (RAM), read-only memory (ROM), Electrical Erasable Read-only Memory (EEPROM), Flash memory, etc., suitable for storing instructions for execution by the processor or sets of processors, and located separate from processor 235 and/or integrated therewith. Memory 237 can store software operating on the computing device 200 by the processor 235, including a media application 103.

The memory 237 may include an operating system 262, other applications 264, and application data 266. Other applications 264 can include, e.g., a video library application, a video management application, a video gallery application, communication applications, web hosting engines or applications, media sharing applications, etc. One or more methods disclosed herein can operate in several environments and platforms, e.g., as a stand-alone computer program that can run on any type of computing device, as a web application having web pages, as a mobile application ("app") run on a mobile computing device, etc.

The application data 266 may be data generated by the other applications 264 or hardware of the computing device 200. For example, the application data 266 may include videos used by the video library application and user actions identified by the other applications 264 (e.g., a social networking application), etc.

I/O interface 239 can provide functions to enable interfacing the computing device 200 with other systems and devices. Interfaced devices can be included as part of the computing device 200 or can be separate and communicate with the computing device 200. For example, network communication devices, storage devices (e.g., memory 237 and/or storage device 249), and input/output devices can communicate via I/O interface 239. In some embodiments, the I/O interface 239 can connect to interface devices such as input devices (keyboard, pointing device, touchscreen, microphone, scanner, sensors, etc.) and/or output devices (display devices, speaker devices, printers, monitors, etc.).

The microphone 241 may include hardware for detecting sounds. For example, the microphone 241 may detect ambient noises, people speaking, music, etc. using a single microphone 241 that is part of the user device 115. In some embodiments, the microphone 241 may include a plurality of audio sensors (e.g., two audio sensors, four audio sensors, or any number of audio sensors). In some embodiments, the microphone 241 sensors may detect audio from a mono clip-on microphone 241 for a videographer's speech, a stereo ambience microphone 241 for nature, and a mono directional microphone 241 for a specific person's speech. Audio detected by individual audio sensors of the microphone 241 may be combined to obtain audio signals.

In some embodiments, the microphone 241 includes additional hardware for processing audio that is captured while a user is recording a video. An analog to digital converter may convert analog electrical signals to digital electrical signals. A digital signal processor may convert the digital electrical signals into a digital output signal. In some embodiments, the digital signal processor performs additional tasks, such as spatial audio modification, which makes it sound as if speakers are located in different parts of a room to reduce audio fatigue, and audio zoom, which enhances the audio of a person that is speaking. A filter block includes hardware that applies a filter to the digital electrical signals. For example, the filter block may apply filters for wind noise reduction, stationary noise suppression, and infinite impulse response. A compressor performs dynamic range compression to reduce the volume of loud sounds or amplify quiet sounds, thereby compressing an audio signal's dynamic range. The processed audio is stored as stereo audio inside a video container file format.

The speaker 243 may include hardware for producing an audio signal that is heard by the user. In some embodiments, the speaker 243 includes an amplifier that is used to amplify certain channels, frequencies, etc. In some embodiments, the amplifier performs automatic gain control to ensure that a signal amplitude maintains a consistent output despite variation in the signal amplitude of the input signal. In some embodiments, the device may also support auxiliary audio playback, e.g., via headphones (wired or wireless), remote speakers (e.g., connected via Bluetooth or other protocol), etc.

A display 245 includes hardware to display content, e.g., images, video, and/or a user interface of an output application as described herein, and to receive touch (or gesture) input from a user. For example, display 245 may be utilized to display a user interface that includes user preferences for types of audio. Display 245 can include any suitable display device such as a liquid crystal display (LCD), light emitting diode (LED), or plasma display screen, cathode ray tube (CRT), television, monitor, touchscreen, three-dimensional display screen, or other visual display device. For example, display 245 can be a flat display screen provided on a mobile device, multiple display screens embedded in a glasses form factor or headset device, or a monitor screen for a computer device.

Camera 247 may be any type of image capture device that can capture images and/or video. In some embodiments, the camera 247 captures images or video that the I/O interface 239 transmits to the media application 103.

The storage device 249 stores data related to the media application 103. For example, the storage device 249 may store a training data set that includes training data, such as a plurality of labelled audio, an audio-separation model, an audio-type classification model, an on-screen classifier model, original videos, enhanced videos, etc.

Figure 2 illustrates an example media application 103 that includes a channel module 202, an on-screen classifier module 204, an audio-type classifier module 206, a mixer 208, and a user interface module 210. In some embodiments, each of the components includes a set of instructions executable by the processor 235 to perform the steps discussed in greater detail below. In some embodiments, each of the components are stored in the memory 237 of the computing device 200 and can be accessible and executable by the processor 235.

The channel module 202 obtains a video that includes an audio portion. For example, the video may be an uncompressed video recorded in full high definition at 1080p resolution, a video recording with 4K resolution etc., and 30/60 frames per second. The audio portion may have an audio sample rate of 48 Kilohertz (kHz), a bit rate of 16 bit, where the audio is a stereo recording.

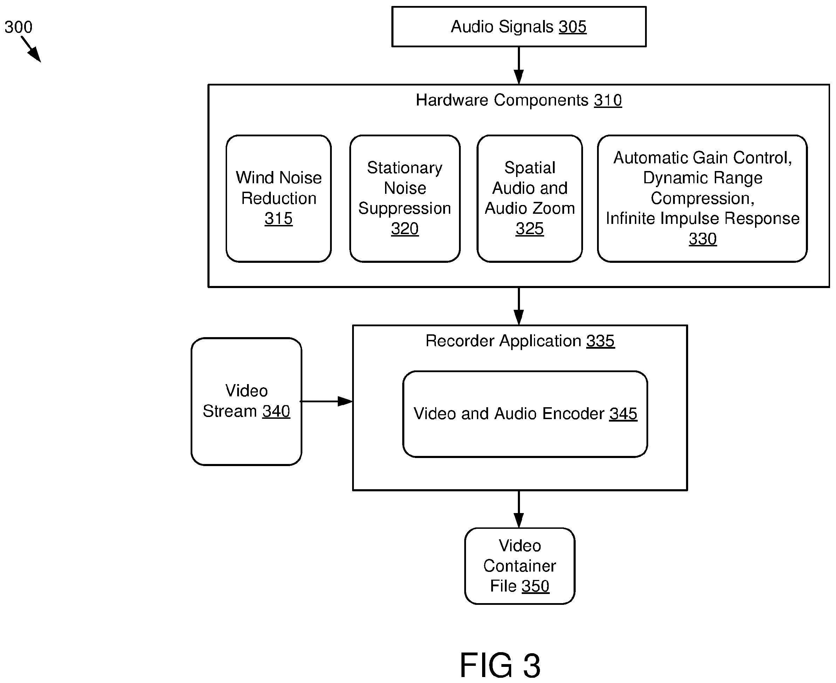

Figure 3 illustrates an example architecture 300 of a system to record audio. The architecture 300 includes hardware components 310 and a recorder application 335. In this example, audio signals 305 are detected by hardware components 310, such as a microphone and modified by other hardware components 310, such as a digital signal processor (DSP), a compressor, a filter, and/or an amplifier. In some embodiments, the hardware components 310 are a microphone that performs the processing without a traditional analog amplifier. Instead, a digital gain control block modifies a digital level of the recorded signal in a digital format.

The filter may apply wind noise reduction 315 and/or stationary noise suppression 320 to the audio signals 305. The digital signal processor may amplify certain sounds and modify other sounds using spatial audio and audio zoom 325. The amplifier may apply automatic gain control 330 to the audio signals 305 to dynamically adjust the gain of the amplifiers. A compressor may perform dynamic range compression 330 to reduce the dynamic range of the audio signal. The filter may apply infinite impulse response 330 to the audio signals 305 to perform digital signal processing, such as notch filtering or shelving filtering to prevent audio frequencies from exceeding a predefined curve.

While Figure 3 shows four separate blocks 315-330, the different functionalities may be performed by any number of hardware components, e.g., an application-specific integrated circuit (ASIC) or audio processor, may incorporate the functionality described with reference to blocks 315-330. Still further, one or more of the operations may not be performed, e.g., wind noise reduction may not be performed if no wind noise is detected in the audio signals 305. Further, the operations described with reference to blocks 315-330 may be performed in any order, with some operations potentially performed simultaneously. In some embodiments, a general purpose processor (CPU) may perform audio processing. In some embodiments, any combination of DSP, ASIC, dedicated audio processor, GPU, machine learning processor, or general purpose processor may perform the operations described with reference to blocks 315-330.

The modified audio signal is transmitted from the hardware components 310 to the recorder application 335 and provided to a video and audio encoder 345. The video and audio encoder 345 also receives a video stream 340 from a camera. The video stream 340 is captured synchronous with audio signals 305. The video and audio encoder 345 encodes the processed audio and the video stream 340 and outputs a video container file 350, such as an MPEG Layer-4 Audio (MP4).

In some embodiments, the channel module 202 modifies the audio portion or received modified audio as a 32 kHz mono signal and creates a number of 32kHz mono signals that are equal to the number of channels as separate outputs. Although the application is described below with four audio channels for ease of explanation, other numbers of channels are possible, such as six channels, eight channels, two channels, etc.

The channel module 202 may use an audio-separation model (e.g., a trained machine learning model) to separate the audio portion of the video into multiple channels. The audio-separation model may be trained to output multiple channels. For example, in some embodiments, the audio-separation model may receive the video as input and each channel that is output by the audio-separate model corresponds to a particular audio source.

In some embodiments, image embeddings corresponding to the video (e.g., local feature embeddings for a plurality of regions of frames of the video and/or a global feature embedding for frames of the video) may be provided as input to the audio-separation model. The image embedding may act as a conditioning input for the audio-separation model. For example, if the audio-separation model detects two human voices (e.g., a male voice and a female voice) in the audio portion of the video clip based on the audio portion, the image embeddings may condition the audio separation to two different audio channels, one for each source (the male and the female person).

The channel module 202 may use an audio-separation model to separate the audio portion into multiple channels. The audio-separation model may be trained to output multiple channels. For example, in some embodiments, the audio-separation model may receive an audio portion of the video as input and each channel that is output corresponds to a particular audio source.

In some embodiments, each channel is associated with a respective sound type. For example, a first channel may correspond to the audio of a person, a second channel may correspond to the audio of a pet, a third channel may correspond to the audio of nature sounds, a fourth channel may correspond to the audio of vehicle sounds, a fifth channel may correspond to the audio of machinery sounds, etc. Each sound type may thus represent a categorization of potential sources of sound in the audio signal (e.g. people, pets, nature, vehicles, machinery etc.).

In some embodiments, the audio-separation model obtains at least one channel by performing deduplication to combine two or more audio sources in the audio portion that are of a same sound type. For example, one channel may include sounds from multiple dogs that are in the video.

In some embodiments, the audio-separation model is a machine-learning model. The audio-separation model trained by the channel module 202 may include one or more model forms or structures. For example, model forms or structures can include any type of neural-network, such as a linear network, a deep-learning neural network that implements a plurality of layers (e.g., "hidden layers" between an input layer and an output layer, with each layer being a linear network), a convolutional neural network (e.g., a network that splits or partitions input data into multiple parts or tiles, processes each tile separately using one or more neural-network layers, and aggregates the results from the processing of each tile), a sequence-to-sequence neural network (e.g., a network that receives as input sequential data, such as words in a sentence, frames in a video, etc. and produces as output a result sequence), etc.

The model form or structure may specify connectivity between various nodes and organization of nodes into layers. For example, nodes of a first layer (e.g., an input layer) may receive data as input data or application data 266. Such data can include, for example, one or more waveforms per node, e.g., when the trained model is used for analysis, e.g., of audio. Subsequent intermediate layers may receive as input, output of nodes of a previous layer per the connectivity specified in the model form or structure. These layers may also be referred to as hidden layers. A final layer (e.g., output layer) produces an output of the machine-learning model. In some embodiments, model form or structure also specifies a number and/ or type of nodes in each layer.

In some embodiments, the channel module 202 may include a plurality of trained audio-separation models. One or more of the audio-separation models may include a plurality of nodes, arranged into layers per the model structure or form. In some embodiments, the nodes may be computational nodes with no memory, e.g., configured to process one unit of input to produce one unit of output. Computation performed by a node may include, for example, multiplying each of a plurality of node inputs by a weight, obtaining a weighted sum, and adjusting the weighted sum with a bias or intercept value to produce the node output. In some embodiments, the computation performed by a node may also include applying a step/activation function to the adjusted weighted sum. In some embodiments, the step/activation function may be a nonlinear function. In various embodiments, such computation may include operations such as matrix multiplication. In some embodiments, computations by the plurality of nodes may be performed in parallel, e.g., using multiple processor cores of a multicore processor, using individual processing units of a graphics processing unit (GPU), or special-purpose neural circuitry. In some embodiments, nodes may include memory, e.g., may be able to store and use one or more earlier inputs in processing a subsequent input. For example, nodes with memory may include long short-term memory (LSTM) nodes. LSTM nodes may use the memory to maintain "state" that permits the node to act like a finite state machine (FSM).

In some embodiments, the trained model may include embeddings or weights for individual nodes. For example, a model may be initiated as a plurality of nodes organized into layers as specified by the model form or structure. At initialization, a respective weight may be applied to a connection between each pair of nodes that are connected per the model form, e.g., nodes in successive layers of the neural network. For example, the respective weights may be randomly assigned, or initialized to default values. The audio-separation model may then be trained, e.g., using training data, to produce a result.

Training may include applying supervised learning techniques. In supervised learning, the training data can include a plurality of inputs (e.g., a plurality of training video clips) and a corresponding ground truth output for each input (e.g., ground truth channels of audio for particular audio sources from the audio clips). Based on a comparison of the output of the model (e.g., predicted channels) with the ground truth output (e.g., the ground truth channels), values of the weights are automatically adjusted, e.g., in a manner that increases a probability that the model produces the ground truth channels.

In various embodiments, a trained model includes a set of weights, or embeddings, corresponding to the model structure. In some embodiments, the trained audio-separation model may include an initial set of weights, e.g., downloaded from a server that provides the weights. In various embodiments, a trained audio-separation model includes a set of weights, or embeddings, corresponding to the model structure. In embodiments where data is omitted, the channel module 202 may generate a trained audio-separation model that is based on prior training, e.g., by a developer of the channel module 202, by a third-party, etc.

In some embodiments, where the audio-separation model includes a convolutional neural network trained using supervised learning, the training of the audio-separation model may include, for each training clip, obtaining predicted channels based on the training clips. The audio-separation model may calculate a loss value based on a comparison of the predicted channels and ground truth channels (included in the training data) for the audio clip. The audio-separation model may update a weight of one or more nodes of the convolutional neural network based on the loss value (e.g., in a way that, after adjustment and running another cycle of the training, the loss value is reduced, till the loss value is below a threshold).

In some embodiments, the audio-separation model includes learnable convolutional encoder and decoder layers with a time-domain convolutional network masking network.

The on-screen classifier module 204 implements an on-screen classifier model to output an indication of whether the particular audio source associated with a channel is depicted in the video. The indication may include an on-screen probability value that reflects the likelihood that a sound corresponding to a channel originated from an object that is visible in the video. For example, the on-screen classifier module 204 may receive four (or six, eight, etc.) 32 kHz mono audio signals and video frames as input and output four (or six, eight, etc.) indications of whether the audio source is depicted in the video frames.

In some embodiments, the on-screen classifier model is a machine-learning model. The on-screen classifier module 204 trains the on-screen classifier model using training data to extract image embeddings for video frames of the video and audio embeddings for the channels that are provided as input to the on-screen classifier model. The image embeddings may include local feature embeddings for multiple regions (e.g., 64 regions, 50 regions, etc.) of a frame of the video and/or a global feature embedding for the frame of the video. The image embeddings may identify the active regions in the frames where a potential audio source is located. The audio embeddings may represent audio features for each of the audio channels.

The training data may include training videos with high on-screen probability values that objects that are sources of audio in the videos are on screen. The training videos may include both on-screen and off-screen sounds, and some examples of off-screen sounds with no on-corresponding screen objects. Although the process may include unsupervised learning, the training data may include some supervised training data with human annotations that indicate whether sounds are present or not present in the video. In some embodiments, the training data also includes labels during training that are associated with audio sources where the label is a short, human-readable description of the sound, such as "dog bark."

The on-screen classifier model is trained to receive each channel from the channel module 202 and to extract image embeddings for the video frames of a video and audio embeddings for the audio source associated with the channel. In some embodiments, the on-screen classifier module 204 performs the steps of extracting image embeddings and audio embeddings iteratively for a subset of the video, such as every five seconds, 10 seconds, 15 seconds etc. As a result, the image embeddings represent the active segments of the audio portion as the objects change positions as a function of time.

In some embodiments, the on-screen classifier module 204 includes a first convolutional neural network that extracts the image embedding for the image frames and a second convolutional neural network that extracts the audio embeddings for each channel. In some embodiments, e.g., when the on-screen classifier model includes the first convolutional neural network and the second convolutional neural network, the on-screen classifier model may further include a fusion network that combines the output of the first and second convolutional neural networks to combine the image embeddings and the audio embeddings, respectively, to infer correspondence between the audio and the objects in the video frames.

In some embodiments, the first convolutional neural network may include multiple layers and may be trained to analyze video, e.g., video frames. In some embodiments, the second convolutional neural network may include multiple layers and may be trained to analyze audio, e.g., audio spectrograms corresponding to the video frames. In some embodiments, the fusion network may include multiple layers that are trained to receive as input the output of the first and second convolutional neural networks, and provide as output the indication that the audio source for each channel is present in the input video frames of the video.

In different embodiments, the first model may include only the first convolutional neural network, only the second convolutional neural network, both the first and second convolutional neural networks, or both the first and second convolutional neural networks and a fusion network. In some embodiments, the first model and/or the second model may be implemented using other types of neural networks or other types of machine-learning models.

The audio-type classifier module 206 may determine, with an audio-type classifier model, an auditory object classification for each auditory source associated with a channel. For example, the audio-type classifier module 206 may output four (or six, or eight, etc.) auditory object classifications as outputs.

In some embodiments, the audio-type classifier model determines an auditory object classification based on the type of audio. For example, the audio-type classifier model may ignore the indication of whether the particular audio source for each channel is depicted in the video if the auditory object is wind because wind is typically associated with the lowest gain regardless of whether wind is depicted on-screen or not. As a result, the multiplier and the offset for wind in the table below are set to 0.

In some embodiments, the audio-type classifier model receives the indication of whether the particular audio source for each channel is depicted in the video (e.g., as output by the on-screen classifier) as input and determine an auditory object classification based on the indication. For example, if the particular audio source is depicted in the video, the audio channel is associated with either an enhancer type or a distractor type based on the type of object that is associated with the audio source. In some embodiments, the auditory object classification is performed by a machine-learning model. For example, the audio-type classifier model may include a convolutional neural network that outputs the auditory object classification.

Table 1 includes example multipliers and offsets for audio types. In some embodiments, the values in Table 1 may be default settings that the user can change as described in greater detail below with reference to the user interface module 210.

Table 1.

| Audio Type | Multiplier | Offset |
|---|---|---|
| Speech | 2 | 0.5 |
| People | 0.5 | 0 |
| Pets | 1 | 0.25 |
| Wildlife | 1 | 0.25 |
| Music | 1.8 | 0.5 |
| Nature | 1.5 | 0.5 |
| Vehicle | 0.5 | 0 |
| Cooking | 0.5 | 0 |
| Tools | 0.5 | 0 |
| Machinery | 0 | 0 |
| Explosion | 0 | 0 |
| Alarm | 0.5 | 0 |
| Wind | 0 | 0 |

In some embodiments, the audio-type classifier module 206 determines the auditory object classification by calculating a confidence score. In some embodiments, the confidence score is calculated using the following equation:

$$\text{on-screen probability value} \times \text{multiplier} + \text{offset} \qquad \text{Eq. 1}$$

The on-screen probability value is determined by the audio-type classifier model, the multiplier is determined by identifying the type of object in the video and/or based on the audio and retrieving the corresponding value from Table 1, and the offset is determined based on the type of object listed in Table 1.

In some embodiments, if the confidence score is greater than or equal to 1, the audio-type classifier module 206 may categorize the audio source as an enhancer type. If the confidence score times a multiplier is less than 1, the audio-type classifier module 206 may categorize the audio source as a distractor type.

For example, if the probability value of nature appearing in the video frames is 0.9, the multiplier is 1.5 and the offset is 0.5, the confidence score is 1.85, which is greater than 1. As a result, the audio-type classifier module 206 determines that the auditory object classification for the audio source is the enhancer type.

The audio-type classifier module 206 determines a respective gain for each channel based on the indication of whether the particular audio source for the channel is depicted in the video and the auditory object classification for the channel. In some embodiments, if the particular audio source for a channel is identified as being an enhancer type, the audio-type classifier module 206 raises a volume level of the channel. If the particular audio source for the channel is identified as being a distractor type, the audio-type classifier module 206 lowers the volume level of the channel.

In some embodiments, the audio-type classifier model receives the indication of whether the particular audio source for each channel is depicted in the video as input and outputs calculated gain. For example, the audio-type classifier model may receive four on-screen confidence scores for four channels as inputs and outputs four mono track gain calculations and one stereo track gain. The audio-type classifier module 206 modifies each channel by applying the respective gain to each audio source for each channel. In some embodiments, the audio-type classifier module 206 applies sound-enhancing effects to channels where gain is being applied as well. For example, the sound-enhancing effects may improve the clarity of speech in a channel for voices that are speaking.

In some embodiments, if the confidence score is equal to or less than 0.5, the audio-type classifier module 206 reduces the volume level associated with the audio source so that it is not audible or removes the audio signal associated with the channel so that it is not mixed with the other channels by the mixer 208.

In some embodiments, the audio-type classifier module 206 uses a ratio of volume for each channel as compared to the total volume. In some embodiments, each channel's gain may equal 1 if the channel is unchanged, the gain is greater than 1 if the channel is boosted or enhanced, and the channel's gain is less than 1 if the channel's volume should be attenuated. In one example with four channels, channel 1 has a gain of 1 because the channel is unchanged, channel 2 has a gain of 1 ½ because the audio was increased, channel 3 represents none of the volume because the audio source was determined to be a distractor with a confidence score of 0.35, and channel 4 has a ratio of ¾ because the channel's volume is attenuated.

The mixer 208 mixes the modified channels at their newly determined volume levels with the audio portion to generate a combined audio. In some embodiments, the total volume of the combined audio does not exceed the volume of the original audio portion.

In some embodiments, the mixer 208 mixes at least a part of the audio portion with the combined audio. Mixing at least a part of the audio portion can address the problem of audible artifacts that may be caused by the sound separation that occurs when the channel module 202 separates the audio portion into channels. For example, the sound separation may cause musical noise and mixing at least a part of the audio portion with the combined audio may mask the musical sound.

In some embodiments, if the sound separation is performed at a lower frequency sampling rate than the audio portion (e.g., the sound separation may occur at a 16 kHz sampling rate while the audio portion is at 48 kHz), the mixer 208 may mix a part of higher-frequency portions of the audio portion in with the combined audio. In some embodiments, the mixer 208 may filter the audio portion to exclude frequencies below a threshold frequency value and then mix at least a portion of the filtered audio in with the combined audio.

The mixer 208 mixes the combined audio with the video to generate an enhanced video file. For example, the enhanced video file may be an enhanced MP4 container file.

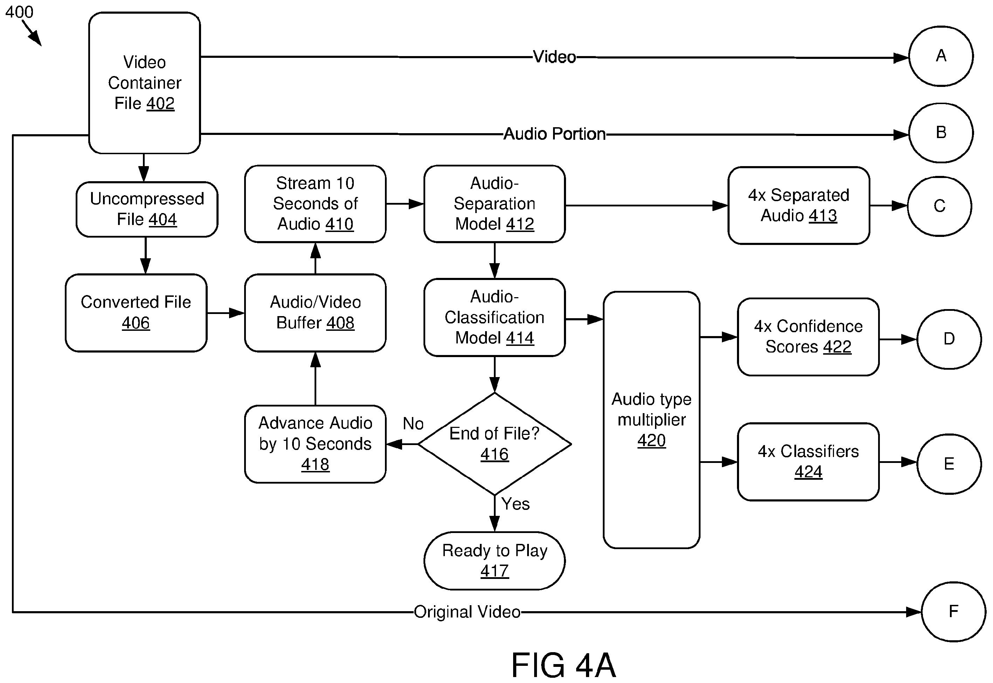

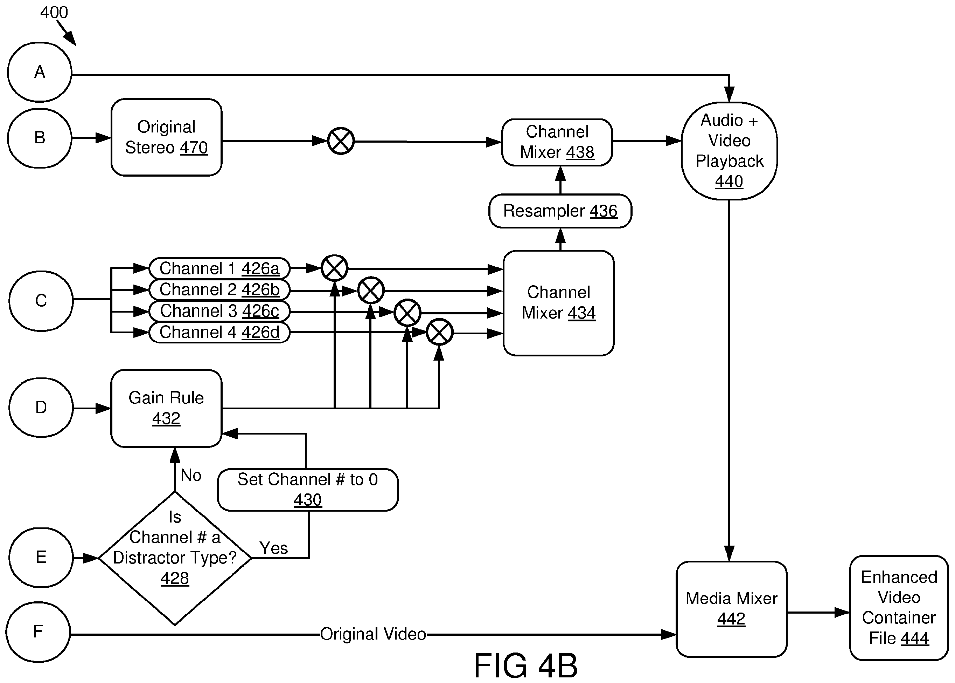

Figures 4A-4B illustrate an example architecture 400 to generate an enhanced video file. Beginning with Figure 4A, a video container file 402 includes both video and an audio portion. The video container file 402 includes video that is discussed further with reference to circle A in Figure 4B. The video container file 402 includes audio that is discussed further with reference to circle B in Figure 4B. The original video that is part of the video container file 402 is discussed further with reference to circle F in Figure 4B.

The video container file 402 is decoded to obtain an uncompressed file 404. The uncompressed file may include an uncompressed video recorded in full high definition at 1080p resolution, a video recorded with 4K/8K resolution etc., and 30/60 frames per second (or at other frame rates). The audio portion may have an audio sample rate of 48 Kilohertz (kHz), a bit rate of 16 bit, and the audio may be a stereo recording.

The uncompressed file 404 is modified to obtain a converted file 406 that is suitable as input to the audio-separation model. The converted file 406 may include a video at 1080p resolution, a video recording with 4K resolution etc., and 1 frame per second by selecting a single frame of the video every second (or 2, 3 or other number of frames per second, lower than the 25/30/60 fps original video, using frame sampling). Given that objects depicted in a video do not typically change at most frame boundaries, using one frame per second to perform image processing, e.g., to generate image embeddings, can save computational cost by eliminating the need to process other images, with little to no effect on the audio enhancement. The audio portion may have an audio sample rate of 32 kHz, a bit rate of 16 bit, and the audio may be in mono.

An audio/video buffer 408 provides buffering, such as three seconds of buffering with 0 seconds of audio padding. 10 seconds of audio is streamed (410). The streamed audio is provided to the audio-separation model 412. The audio-separation model 412 separates the audio portion into a number of channels (referred to as the 4x separated audio 413) based on the number of audio sources. In this example, the audio-separation model 412 divides the audio portion into four channels, but other numbers of channels are possible based on the implementation and/or based on the number of audio sources. The 4x separated audio 413 is described further in Figure 4B with reference to circle C.

The audio-classification model 414 receives the four channels from the audio-separation model 412. The audio-classification model 414 may correspond to an on-screen classifier model and an audio-type classifier model as discussed in greater detail above with reference to Figure 2. The audio-classification model 414 generates an on-screen probability value for each channel that indicates the likelihood that the particular audio source for each channel is depicted in the video. It is determined whether the end of the file 416 has been reached. If yes, the file is ready to be played 417. If no, the audio is advanced 418 by 10 seconds (or three, five, 15, etc.) and the process continues until the end of file 416 is reached.

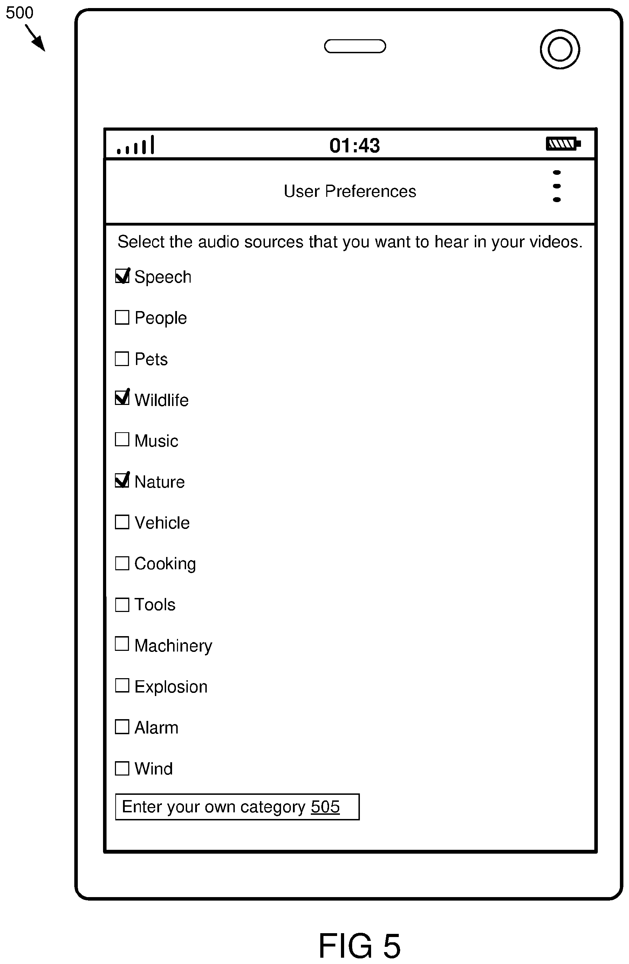

The audio-classification model 414 also determines an auditory object classification. For example, the audio-classification model 414 determines the type of object associated with the auditory source. The audio type multiplier 420 determines a multiplier for the auditory source in each channel based on the type of object. The types of objects may be based on a default setting, such as the object types listed in Table 1 or they may be modified based on user input, such as via the user interface illustrated in Figure 5. The audio type multiplier 420 may also include an offset, as shown in Table 1.

Applying the multiplier and the offset results in 4x confidence scores 422, one confidence score per channel. The 4x confidence scores 422 are discussed further with reference to circle D in relation to Figure 4B. In addition, the 4x confidence scores are used to determine 4x classifiers 424, one for each audio channel. For example, each channel may be classified as having an audio source that is a distractor type or an enhancer type where the distractor type may be associated with a confidence score that is less than 1 and the enhancer type is associated with a confidence score that is 1 or greater. The 4x classifiers 424 are discussed further with reference to circle E in relation to Figure 4B.

Turning to Figure 4B, the 4x separated audio 413 from Figure 4A is illustrated as four channels 426a through 426d. If the 4x classifiers 424 from Figure 4A indicate that one or more the channels are associated with a distractor type 428, such are set to 0 (413) so that they are not audible in the audio. A gain rule 432 is determined for the other channels based on the 4x on-screen confidence scores 422.

Each channel 426a, d (from 4x separated audio 413 of Fig. 4A) is modified by applying the respective gain based on the gain rules 432. The channel mixer 434 mixes the modified channels to generate a combined audio. In some embodiments, a resampler 436 is used to convert the original audio sampling rate from the video container file 402 (which are usually at 44.1 kHz or 48 kHz, but could be at other rates) to the processing sampling rate of 32 kHz. By using a resampler, a machine-learning model can support all the audio sampling rates from the video container file 402. The modified channels are mixed by another channel mixer 438 that mixes the combined audio with the original stereo audio (470). In some embodiments, channel mixer 434 and resampler 436 may be omitted and the original stereo audio (470) may be combined with channels 426a-426d.

The output audio obtained from channel mixer 438 is combined with the video (from the video container file 402) to form audio and video playback 440.

The audio and video playback 440 may have some imperfections in the audio quality that take the form of audible artifacts (e.g., glitches, clicks, instantaneous hissing, etc.). The audio and video playback 440 may be combined with the original video by a media mixer 442 to generate an enhanced video container file 444. For example, the audio of 440 may be mixed with reduced original sound by the media mixer 442 to provide a less audible sensation of the imperfection because of the auditory masking effect.

The user interface module 210 generates graphical data for displaying a user interface that includes an option for a user to specify user preferences. The user preferences may include options for consenting to the processing of videos created by the user using the audio enhancement techniques described herein, transmitting the videos and the audio portion to the server for processing, etc. The user preferences may also include options for specifying preferences about types of auditory objects.

Figure 5 illustrates an example user interface 500 with options for specifying user preferences. In this example, the user may select a checkbox next to the audio sources that the user wants to hear in the videos. Selecting a checkbox may result in the audio-type classifier module automatically classifying the object as an enhancer type as long as the object is associated with an indication that the object is likely to be onscreen. In this example, the user has checked boxes for speech, wildlife, and nature, indicating that those objects are ones that the user wants to hear in videos. The user interface 500 also includes an option to enter an additional category using the field 505 at the bottom of the user interface 500.

Example Flowchart

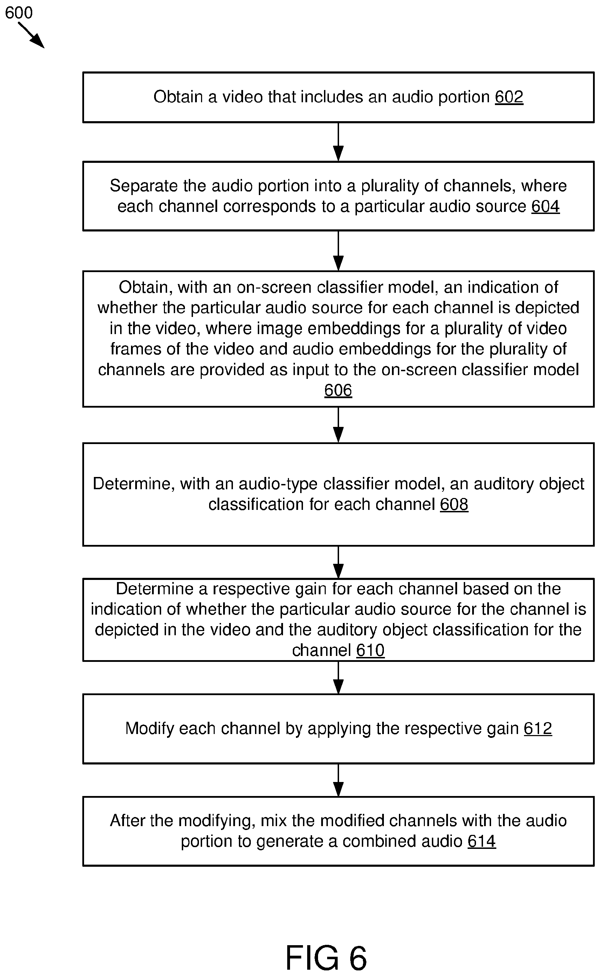

Figure 6 illustrates an example flowchart of a method 600 to generate combined audio. The method 600 may be performed by the computing device 200 in Figure 2. In some embodiments, the method 600 is performed by the user device 115, the media server 101, or in part on the user device 115 and in part on the media server 101 of Figure 1.

The method 600 of Figure 6 may begin at block 602. At block 602, a video is obtained that includes an audio portion. Block 602 may be followed by block 604.

At block 604, the audio portion is separated into a plurality of channels. Each channel corresponds to a particular audio source. In some embodiments, each channel corresponds to a respective sound type, such as a type of animal or a nature sound. One or more of the plurality of channels may be obtained by performing deduplication to combine two or more audio sources in the audio portion that are of a same sound type, such as multiple bird sounds being separated into the same channel. In some embodiments, the separating is performed using an audio-separation model wherein the audio-separation model uses the image embeddings as a conditioning input, wherein the conditioning input provides cues to audio-separation model about audio sources present in the video. Block 604 may be followed by block 606.

At block 606, an on-screen classifier model obtains an indication of whether the particular audio source for each channel is depicted in the video. Image embeddings for a plurality of video frames of the video and audio embeddings for the plurality of channels are provided as input to the on-screen classifier model. The image embeddings may represent respective local video features for a plurality of regions of a frame of the video. Audio embeddings may represent respective local audio features for each of the plurality of channels. Block 606 may be followed by block 608.

At block 608, an audio-type classifier model determines an auditory object classification for each channel. In some embodiments, the auditory object classification is one of: an enhancer type or a distractor type. Block 608 may be followed by block 610.

At block 610, a respective gain is determined for each channel based on the indication of whether the particular audio source for the channel is depicted in the video and the auditory object classification for the channel. Determining the respective gain for each channel may include determining the respective gain to each channel such that a volume level of channels associated with the enhancer type is raised and a volume level of channels associated with the distractor type is lowered. In some embodiments, the audio-type classifier module 206 applies sound-enhancing effects to channels where gain is being applied as well. Block 610 is followed by block 612.

At block 612, each channel is modified by applying the respective gain. The respective gain for each channel may be based on a confidence associated with the indication and the auditory object classification. Block 612 may be followed by block 614.

At block 614, after the modifying, the modified channels are mixed with the audio portion to generate a combined audio. In some embodiments, at least a part of the audio portion is mixed in with the combined audio. In some embodiments, at least a part of higher-frequency portions of the audio portion are mixed in with the combined audio. These additional mixings may help to mask any artifacts that are present in the audio as a result of separating the audio portion into the plurality of channels.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

In the above description, for purposes of explanation, numerous specific details are set forth in order to provide a thorough understanding of the specification. It will be apparent, however, to one skilled in the art that the disclosure can be practiced without these specific details. In some instances, structures and devices are shown in block diagram form in order to avoid obscuring the description. For example, the embodiments can be described above primarily with reference to user interfaces and particular hardware. However, the embodiments can apply to any type of computing device that can receive data and commands, and any peripheral devices providing services.

Reference in the specification to "some embodiments" or "some instances" means that a particular feature, structure, or characteristic described in connection with the embodiments or instances can be included in at least one implementation of the description. The appearances of the phrase "in some embodiments" in various places in the specification are not necessarily all referring to the same embodiments.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic data capable of being stored, transferred, combined, compared, and otherwise manipulated. It has proven convenient at times, principally for reasons of common usage, to refer to these data as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms including "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission, or display devices.

The embodiments of the specification can also relate to a processor for performing one or more steps of the methods described above. The processor may be a special-purpose processor selectively activated or reconfigured by a computer program stored in the computer. Such a computer program may be stored in a non-transitory computer-readable storage medium, including, but not limited to, any type of disk including optical disks, ROMs, CD-ROMs, magnetic disks, RAMs, EPROMs, EEPROMs, magnetic or optical cards, flash memories including USB keys with non-volatile memory, of any type of media suitable for storing electronic instructions, each coupled to a computer system bus.

The specification can take the form of some entirely hardware embodiments, some entirely software embodiments or some embodiments containing both hardware and software elements. In some embodiments, the specification is implemented in software, which includes, but is not limited to, firmware, resident software, microcode, etc.

Furthermore, the description can take the form of a computer program product accessible from a computer-usable or computer-readable medium providing program code for use by or in connection with a computer or any instruction execution system. For the purposes of this description, a computer-usable or computer-readable medium can be any apparatus that can contain, store, communicate, propagate, or transport the program for use by or in connection with the instruction execution system, apparatus, or device.

A data processing system suitable for storing or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

**Claims**

1. A computer-implemented method (600) comprising:

   obtaining (602) a video that includes an audio portion;
   separating (604) the audio portion into a plurality of channels, wherein each channel corresponds to a particular audio source;
   obtaining (606), with an on-screen classifier model, an indication of whether the particular audio source for each channel is depicted in the video, wherein image embeddings for a plurality of video frames of the video and audio embeddings for the plurality of channels are provided as input to the on-screen classifier model;
   determining (608), with an audio-type classifier model, an auditory object classification for each channel;
   determining (610) a respective gain for each channel based on the indication of whether the particular audio source for the channel is depicted in the video and the auditory object classification for the channel;
   modifying (612) each channel by applying the respective gain;
   after the modifying, mixing (614) the modified channels with the audio portion to generate a combined audio; and
   mixing at least a part of higher-frequency portions of the audio portion in with the combined audio.

2. The method of claim 1, wherein:

   the auditory object classification is one of: an enhancer type or a distractor type; and
   determining the respective gain for each channel based on the indication of whether the particular audio source for the channel is depicted in the video and the auditory object classification for the channel comprises determining the respective gain to each channel such that a volume level of channels associated with the enhancer type is raised and a volume level of channels associated with the distractor type is lowered.

3. The method of claim 2, wherein separating the audio portion into the plurality of channels is such that each of the plurality of channels is associated with a respective sound type.

4. The method of claim 3, wherein one or more of the plurality of channels is obtained by combining two or more audio sources in the audio portion that are of a same sound type.

5. The method of claim 1, wherein the image embeddings represent respective local video features for a plurality of regions of a frame of the video.

6. The method of claim 1, wherein the audio embeddings represent respective audio features for each of the plurality of channels.

7. The method of claim 1, wherein the respective gain for each channel is based on a confidence associated with the indication and a confidence associated with the auditory object classification.

8. The method of claim 1, wherein the separating is performed using an audio-separation model wherein the audio-separation model uses the image embeddings as a conditioning input, wherein the conditioning input provides cues to audio-separation model about audio sources present in the video.

9. A non-transitory computer-readable medium with instructions stored thereon that, when executed by one or more computers, cause the one or more computers to perform steps of the method according to any one of the preceding claims.

**10.** A computing device comprising:

> a processor; and
> a memory coupled to the processor, with instructions stored thereon that, when executed by the processor, cause the processor to perform steps of the method according to any one of the preceding claims 1 to 8.

**Patentansprüche**

**1.** Computerimplementiertes Verfahren (600), umfassend:

> Erhalten (602) eines Videos, das einen Audioteil enthält;
> Aufteilen (604) des Audioteils in eine Vielzahl von Kanälen, wobei jeder Kanal einer bestimmten Audioquelle entspricht;
> Erhalten (606) mit einem On-Screen-Klassifikatormodell einer Angabe darüber, ob die bestimmte Audioquelle für jeden Kanal im Video dargestellt wird, wobei Bildeinbettungen für eine Vielzahl von Videoframes des Videos und Audioeinbettungen für die Vielzahl von Kanälen als Eingabe für das On-Screen-Klassifikatormodell bereitgestellt werden;
> Bestimmen (608) einer auditiven Objektklassifizierung für jeden Kanal mit einem Audio-Typ-Klassifikatormodell;
> Bestimmen (610) einer jeweiligen Verstärkung für jeden Kanal auf der Grundlage der Angabe darüber, ob die bestimmte Audioquelle für den Kanal im Video dargestellt wird, und der auditiven Objektklassifizierung für den Kanal;
> Modifizieren (612) jedes Kanals durch Anwenden der jeweiligen Verstärkung;
> nach dem Modifizieren, Mischen (614) der modifizierten Kanäle mit dem Audioteil, um ein kombiniertes Audiosignal zu erzeugen; und
> Mischen mindestens eines Teils der höherfrequenten Anteile des Audioteils mit dem kombinierten Audiosignal.

**2.** Verfahren nach Anspruch 1, wobei:

> die auditive Objektklassifizierung eine der folgenden ist: ein Verstärkertyp oder ein Ablenkungstyp; und
> das Bestimmen der jeweiligen Verstärkung für jeden Kanal auf der Grundlage der Angabe darüber, ob die bestimmte Audioquelle für den Kanal im Video dargestellt wird, und der auditiven Objektklassifizierung für den Kanal das Bestimmen der jeweiligen Verstärkung für jeden Kanal umfasst, sodass ein Lautstärkepegel von Kanälen, die dem Verstärkertyp zugeordnet sind, erhöht wird und ein Lautstärkepegel von Kanälen, die dem Ablenkungstyp zugeordnet sind, gesenkt wird.

**3.** Verfahren nach Anspruch 2, wobei das Aufteilen des Audioteils in die Vielzahl von Kanälen derart ist, dass jeder der Vielzahl von Kanälen einem jeweiligen Klangtyp zugeordnet ist.

**4.** Verfahren nach Anspruch 3, wobei einer oder mehrere der Vielzahl von Kanälen durch Kombinieren von zwei oder mehr Audioquellen im Audioteil erhalten werden, die von einem gleichen Klangtyp sind.

**5.** Verfahren nach Anspruch 1, wobei die Bildeinbettungen jeweilige lokale Videomerkmale für eine Vielzahl von Bereichen eines Frames des Videos darstellen.

**6.** Verfahren nach Anspruch 1, wobei die Audioeinbettungen jeweilige Audiomerkmale für jeden der Vielzahl von Kanälen darstellen.

**7.** Verfahren nach Anspruch 1, wobei die jeweilige Verstärkung für jeden Kanal auf einer Konfidenz, die mit der Angabe verbunden ist, und einer Konfidenz, die mit der auditiven Objektklassifizierung verbunden ist, basiert.

**8.** Verfahren nach Anspruch 1, wobei das Aufteilen unter Verwendung eines Audio-Separationsmodells durchgeführt wird, wobei das Audio-Separationsmodell die Bildeinbettungen als einen Konditionierungseingang verwendet, wobei der Konditionierungseingang dem Audio-Separationsmodell Hinweise auf im Video vorhandene Audioquellen bereitstellt.

**9.** Nichtflüchtiges computerlesbares Medium mit darauf gespeicherten Anweisungen, die, wenn sie von einem oder mehreren Computern ausgeführt werden, den einen oder die mehreren Computer veranlassen, Schritte des Verfahrens nach einem der vorhergehenden Ansprüche durchzuführen.

10. Rechenvorrichtung, umfassend:

einen Prozessor; und
einen Speicher, der mit dem Prozessor gekoppelt ist, mit darauf gespeicherten Anweisungen, die, wenn sie von dem Prozessor ausgeführt werden, den Prozessor veranlassen, Schritte des Verfahrens nach einem der vorhergehenden Ansprüche 1 bis 8 durchzuführen.

**Revendications**

1. Procédé mis en œuvre par ordinateur (600) comprenant :

l'obtention (602) d'une vidéo qui comporte une partie audio ;
la séparation (604) de la partie audio en une pluralité de canaux, dans lequel chaque canal correspond à une source audio particulière ;
l'obtention (606), avec un modèle de classificateur à l'écran, d'une indication du fait que la source audio particulière pour chaque canal est représentée ou non dans la vidéo, dans lequel des incorporations d'images pour une pluralité d'images vidéo de la vidéo et des incorporations audio pour la pluralité de canaux sont fournis en entrée au modèle de classificateur à l'écran ;
la détermination (608), avec un modèle de classificateur de type audio, d'une classification d'objet auditif pour chaque canal ; la détermination (610) d'un gain respectif pour chaque canal sur la base de l'indication du fait que la source audio particulière du canal est représentée ou non dans la vidéo et de la classification d'objet auditif pour le canal ;
la modification (612) de chaque canal en appliquant le gain respectif ;
après la modification, le mixage (614) des canaux modifiés avec la partie audio pour générer un audio combiné ; et
le mixage d'au moins une partie des parties de fréquences plus élevées de la partie audio à l'audio combiné.

2. Procédé selon la revendication 1, dans lequel :

la classification d'objet auditif est l'un des suivants : un type amplificateur ou un type distracteur ; et
la détermination du gain respectif pour chaque canal sur la base de l'indication du fait que la source audio particulière du canal est représentée ou non dans la vidéo et de la classification d'objet auditif pour le canal comprend la détermination du gain respectif de chaque canal de sorte qu'un niveau de volume de canaux associés au type amplificateur est augmenté et qu'un niveau de volume de canaux associés au type distracteur est diminué.

3. Procédé selon la revendication 2, dans lequel la séparation de la partie audio en une pluralité de canaux est telle que chacun de la pluralité de canaux est associé à un type de son respectif.

4. Procédé selon la revendication 3, dans lequel un ou plusieurs de la pluralité de canaux est obtenus en combinant deux sources audio ou plus dans la partie audio qui sont d'un même type de son.

5. Procédé selon la revendication 1, dans lequel les incorporations d'images représentent des caractéristiques vidéo locales respectives pour une pluralité de régions d'une image de la vidéo.

6. Procédé selon la revendication 1, dans lequel les incorporations audio représentent des caractéristiques audio respectives pour chacune de la pluralité de canaux.

7. Procédé selon la revendication 1, dans lequel le gain respectif de chaque canal est basé sur une confiance associée à l'indication et une confiance associée à la classification d'objet auditif.

8. Procédé selon la revendication 1, dans lequel la séparation est réalisée à l'aide d'un modèle de séparation audio dans lequel le modèle de séparation audio utilise les incorporations d'images comme entrée de conditionnement, dans lequel l'entrée de conditionnement fournit des indices au modèle de séparation audio sur les sources audio présentes dans la vidéo.

9. Support non transitoire lisible par ordinateur sur lequel sont stockées des instructions qui, lorsqu'elles sont exécutées par un ou plusieurs ordinateurs, amènent les un ou plusieurs ordinateurs à réaliser des étapes du procédé selon l'une quelconque des revendications précédentes.

10. Dispositif informatique comprenant :

un processeur ; et
une mémoire couplée au processeur, sur laquelle sont stockées des instructions qui, lorsqu'elles sont exécutées par le processeur, amènent le processeur à réaliser des étapes du procédé selon l'une quelconque des revendications précédentes 1 à 8.

FIG 1

200

218

## Memory 237

| Operating System 262 | Other Applications 264 | Application Data 266 |
|---|---|---|

224

### Media Application 103

| Channel Module 202 | On-Screen Classifier Module 204 |
|---|---|

| Audio-Type Classifier Module 206 | Mixer 208 |
|---|---|

User Interface Module 210

| Processor 235 |
|---|

222

| I/O Interface 239 |
|---|

| Display 245 |
|---|

226

232

| Microphone 241 |
|---|

| Camera 247 |
|---|

228

234

| Speaker 243 |
|---|

Storage Device 249

236

230

# FIG 2

300

Audio Signals 305

Hardware Components 310

Wind Noise
Reduction
315

Stationary
Noise
Suppression
320

Spatial
Audio and
Audio Zoom
325

Automatic Gain Control,
Dynamic Range
Compression,
Infinite Impulse Response
330

Recorder Application 335

Video
Stream 340

Video and Audio Encoder 345

Video
Container
File 350

FIG 3

FIG 4A

EP 4 529 678 B1

FIG 4B

500

## FIG 5

600

```
┌─────────────────────────────────────────────────────────┐
│     Obtain a video that includes an audio portion 602    │
└─────────────────────────────────────────────────────────┘
                            │
                            ▼
┌─────────────────────────────────────────────────────────┐
│  Separate the audio portion into a plurality of channels,│
│   where each channel corresponds to a particular audio   │
│                       source 604                          │
└─────────────────────────────────────────────────────────┘
                            │
                            ▼
┌─────────────────────────────────────────────────────────┐
│  Obtain, with an on-screen classifier model, an          │
│  indication of whether the particular audio source for   │
│  each channel is depicted in the video, where image      │
│  embeddings for a plurality of video frames of the video │
│  and audio embeddings for the plurality of channels are  │
│  provided as input to the on-screen classifier model     │
│                       606                                 │
└─────────────────────────────────────────────────────────┘
                            │
                            ▼
┌─────────────────────────────────────────────────────────┐
│  Determine, with an audio-type classifier model, an      │
│  auditory object classification for each channel 608     │
└─────────────────────────────────────────────────────────┘
                            │
                            ▼
┌─────────────────────────────────────────────────────────┐
│  Determine a respective gain for each channel based on   │
│  the indication of whether the particular audio source   │
│  for the channel is depicted in the video and the        │
│  auditory object classification for the channel 610      │
└─────────────────────────────────────────────────────────┘
                            │
                            ▼
┌─────────────────────────────────────────────────────────┐
│  Modify each channel by applying the respective gain 612 │
└─────────────────────────────────────────────────────────┘
                            │
                            ▼
┌─────────────────────────────────────────────────────────┐
│  After the modifying, mix the modified channels with the │
│   audio portion to generate a combined audio 614         │
└─────────────────────────────────────────────────────────┘
```

# FIG 6

**EP 4 529 678 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022310113 A1
- US 2020075033 A1
- US 2022130408 A1